# FASCICULE DE BREVET EUROPEEN

(11) **EP 4 441 636 B1**
(45) Date de publication et mention de la délivrance du brevet: **08.10.2025**
(21) Numéro de dépôt: 22823094.2
(22) Date de dépôt: 01.12.2022
(51) Int. Cl.: G06F 18/214, G06F 18/2415, G06N 3/02, G06V 10/774, G06V 10/776, G06V 10/82, G06V 20/58

(54) **PROCEDE D'EVALUATION D'INCERTITUDES DE PREDICTION D'UN RESEAU DE NEURONES**
VERFAHREN ZUR BEWERTUNG VON VORHERSAGEUNSICHERHEITEN IN EINEM NEURONALEN NETZWERK
METHOD FOR EVALUATING PREDICTION UNCERTAINTIES IN A NEURAL NETWORK

(30) Priorité: 03.12.2021 FR 2112909
(43) Date de publication de la demande: 09.10.2024
(73) Titulaire: Commissariat à l'Energie Atomique et aux Energies Alternatives, 75015 Paris (FR)
(72) Inventeur: BERNIER, Carolynn, 38054 GRENOBLE (FR); BRUEL, Quentin, 38054 GRENOBLE (FR)
(74) Mandataire: Lavoix
(86) Numéro de dépôt international: PCT/EP2022/084130
(87) Numéro de publication internationale: WO 2023/099697

(56) Documents cités:
- DI FENG ET AL: "A Review and Comparative Study on Probabilistic Object Detection in Autonomous Driving", ARXIV.ORG, CORNELL UNIVERSITY LIBRARY, 201 OLIN LIBRARY CORNELL UNIVERSITY ITHACA, NY 14853, 11 July 2021 (2021-07-11), XP091001112, DOI: 10.1109/TITS.2021.3096854
- ZUXIN LIU ET AL: "Safe Model-based Reinforcement Learning with Robust Cross-Entropy Method", ARXIV.ORG, CORNELL UNIVERSITY LIBRARY, 201 OLIN LIBRARY CORNELL UNIVERSITY ITHACA, NY 14853, 15 October 2020 (2020-10-15), XP081787984
- KANIL PATEL ET AL: "Investigation of Uncertainty of Deep Learning-based Object Classification on Radar Spectra", ARXIV.ORG, CORNELL UNIVERSITY LIBRARY, 201 OLIN LIBRARY CORNELL UNIVERSITY ITHACA, NY 14853, 1 June 2021 (2021-06-01), XP081987882

## Description

La présente invention concerne un procédé d'évaluation d'incertitudes de prédiction d'un réseau de neurones. La présente invention porte aussi sur un produit programme d'ordinateur associé. La présente invention porte également sur un support lisible d'informations associé.

Les algorithmes basés sur des techniques d'apprentissage de réseaux de neurones profonds sont de plus en plus utilisés dans les tâches de perception. Cela s'explique par le fait que de tels algorithmes permettent de reconstruire des scènes complexes à partir de données de capteurs. Les algorithmes de l'état de la technique, basés sur des connaissances d'experts, ne permettent quant à eux que la reconstruction de scènes avec des informations limitées. Des documents sur ces aspects sont, par exemple:
Di Feng et al. - "A Review and Comparative Study on Probabilistic Object Detection in Autonomous Driving", arXiv.org 2011.10671, publié le 11-07-2021 Cornell University Library Ithaca, NY, DOI: 10.1109/TITS.2021.3096854
Zuxin Liu et al: "Safe Model-based Reinforcement Learning with Robust Cross-Entropy Method", arXiv.org 2010.07968, publié le 15-10-2020 Cornell University Library Ithaca, NY.

De tels algorithmes d'apprentissage profond sont notamment basés sur des réseaux de neurones ayant appris sur des données en provenance de capteurs. Néanmoins, les prédictions effectuées par ces réseaux de neurones sont affectées d'incertitudes. Or, de telles incertitudes sont susceptibles d'affecter la fonction de perception, ce qui est problématique pour les applications utilisant cette fonction de perception, par exemple pour la conduite d'un véhicule autonome. La quantification de telles incertitudes apparaît donc comme un enjeu majeur pour la confiance dans les systèmes qui en dépendent.

En particulier, il existe deux grands types d'incertitudes affectant les fonctions de perception. Le premier type d'incertitudes est relatif aux incertitudes sur les données, aussi appelées incertitudes aléatoires. Les incertitudes aléatoires découlent de l'incapacité, avec tout capteur réel, de détecter complètement tous les détails de l'environnement, ce qui entraîne une incertitude qui ne peut être réduite même si davantage de données sont recueillies. Le second type d'incertitudes, aussi appelées incertitudes épistémiques, tient compte de l'incertitude des paramètres du réseau de neurones (ses poids), du fait d'un apprentissage sur des données en quantité insuffisante. Les incertitudes épistémiques peuvent être réduites si l'on dispose de suffisamment de données, alors que ce n'est pas le cas pour les incertitudes aléatoires.

De nombreux travaux se sont penchés sur la modélisation des incertitudes dans le but de détecter, en cours d'exécution, les échantillons hors distribution (en anglais « out of distribution samples », c'est-à-dire des données qui ne sont pas dans la distribution correspondant aux données d'apprentissage) pour les applications de perception environnementale. Certains travaux tentent de modéliser conjointement les incertitudes aléatoires et épistémiques, alors que d'autres se concentrent spécifiquement sur la modélisation individuelle des différents types d'incertitudes aléatoires et épistémiques.

Il est notamment connu des approches mathématiques pour modéliser ces incertitudes, utilisant des réseaux de neurones bayésiens. L'une de ces approches utilise une technique connue sous le nom de dropout de Monte-Carlo. D'autres approches utilisent des réseaux de neurones profonds formés à partir de différentes initialisations aléatoires et dont les sorties sont moyennées, pour approximer l'incertitude épistémique.

Ainsi, les approches actuelles d'estimation d'incertitudes apparaissent basées sur des cadres mathématiques complexes qui sont difficiles à comprendre et à mettre en œuvre. Les modèles sur lesquels ces méthodes reposent sont aussi difficiles à valider.

Il existe donc un besoin pour un moyen d'estimation des incertitudes de prédiction d'un réseau de neurones plus intuitif et plus simple à mettre en œuvre que les approches mathématiques de l'état de la technique, basées notamment sur des réseaux de neurones bayésiens.

A cet effet, l'invention a pour objet un procédé d'évaluation d'incertitudes de prédiction d'un réseau de neurones, le réseau de neurones à évaluer ayant été entraîné sur des données en provenance d'un capteur, dit capteur utile, les incertitudes étant dues à des imperfections du capteur utile et à des imperfections dans l'entraînement du réseau de neurones, le réseau de neurones étant propre à déterminer un ensemble de données caractéristiques pour une scène à caractériser en fonction d'un ensemble de données obtenu pour la scène à un instant donné par le capteur utile, chaque ensemble de données caractéristiques comprenant un découpage de la scène en zones avec au moins une caractéristique attribuée à chaque zone de la scène à l'instant donné, le procédé étant mis en œuvre par ordinateur et comprenant les étapes suivantes :
a. l'obtention d'au moins une base de données d'évaluation, chaque base de données d'évaluation étant spécifique à une scène de référence et associant :
   i. k ensembles de données de la scène de référence, dites données d'évaluation, obtenus par le capteur utile à k différents instants d'acquisition, à
   ii. un ensemble de données caractéristiques validées de la scène de référence, dites données vraies,
b. l'inférence du réseau de neurones en prenant successivement en entrée les k ensembles de données d'évaluation de chaque base de données d'évaluation, de sorte à obtenir, pour chaque scène de référence, k ensembles de données caractéristiques prédites,
c. pour chaque zone de chaque scène de référence, la détermination de la fréquence d'occurrence de chaque caractéristique associée à la zone, la détermination étant effectuée sur la base des k ensembles de données caractéristiques prédites obtenus pour la scène de référence considérée, et
d. l'évaluation d'incertitudes de prédiction du réseau de neurones par comparaison des ensembles de données caractéristiques prédites à l'ensemble de données vraies correspondant en fonction des fréquences d'occurrence déterminées.

Suivant des modes de réalisation particuliers, le procédé comprend une ou plusieurs des caractéristiques suivantes, prise(s) isolément ou suivant toutes les combinaisons techniquement possibles :
- l'étape de détermination de la fréquence d'occurrence comprend, pour chaque zone de la scène de référence considérée :
   a. la détermination d'un histogramme des caractéristiques obtenues pour la zone pour les k différents instants d'acquisition correspondants, et
   b. la division des valeurs de l'histogramme par le nombre d'instants d'acquisition différents pour obtenir la fréquence d'occurrence de chaque caractéristique pour la zone considérée,
- l'étape d'évaluation comprend la détermination, pour chaque scène de référence, d'un modèle d'incertitudes pour le réseau de neurones en fonction des fréquences d'occurrence déterminées pour les ensembles de données caractéristiques prédites de la scène de référence considérée, chaque modèle d'incertitudes est propre à être utilisé ultérieurement pour compenser des incertitudes dans les prédictions effectuées par le réseau de neurones,
- l'étape d'évaluation comprend l'affichage d'une représentation graphique du ou d'au moins un modèle d'incertitudes sur un afficheur,
- l'étape d'évaluation comprend l'agrégation des modèles d'incertitudes obtenus pour les différentes scènes de référence des bases de données d'évaluation pour obtenir un modèle d'incertitudes final,
- le procédé comprend, après l'étape d'évaluation, une étape d'exploitation du réseau de neurones, l'étape d'exploitation comprenant :
   a. l'inférence du réseau de neurones en prenant en entrée un ensemble de données d'une scène à caractériser obtenu par le capteur utile, de sorte à obtenir en sortie un ensemble de données caractéristiques prédites pour la scène à caractériser, et
   b. le traitement de l'ensemble de données caractéristiques prédites par application du modèle d'incertitudes à l'ensemble de données caractéristiques prédites, de sorte à obtenir un ensemble de données caractéristiques prédites améliorées,
- l'étape d'exploitation comprend la fusion de l'ensemble de données caractéristiques prédites améliorées avec des données complémentaires, les données complémentaires étant des données caractéristiques de la même scène à caractériser obtenues par un capteur différent du capteur utile,
- les caractéristiques de chaque zone sont choisies dans le groupe constitué de : une caractéristique relative à la présence ou non d'un ou plusieurs éléments sur la zone, une caractéristique relative au déplacement d'un ou plusieurs éléments sur la zone, une caractéristique relative au déplacement d'un élément à une vitesse donnée sur la zone et une caractéristique relative à la présence ou non d'un élément spécifique sur la zone,
- le capteur utile est un capteur à entrées multiples et à sorties multiples, tel qu'un radar ou un sonar,
- lors de l'obtention d'un ensemble de données pour la scène à un instant donné par le capteur utile :
   a. le capteur utile est disposé sur un véhicule, et la scène correspond à l'environnement situé dans le champ de vision du capteur utile, ou
   b. le capteur utile est disposé dans une installation, et la scène correspond à l'environnement situé dans le champ de vision du capteur utile.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et entraînant la mise en œuvre d'un procédé tel que décrit précédemment lorsque le programme d'ordinateur est mis en œuvre sur l'unité de traitement des données.

La présente description concerne aussi un support lisible d'informations sur lequel est mémorisé un produit programme d'ordinateur tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :
[Fig 1], Figure 1, une représentation schématique d'un exemple de calculateur permettant la mise en œuvre d'un procédé d'évaluation d'incertitudes de prédiction d'un réseau de neurones,
[Fig 2], Figure 2, un organigramme d'un exemple de mise en œuvre d'un procédé d'évaluation d'incertitudes de prédiction d'un réseau de neurones,
[Fig 3], Figure 3, une représentation schématique d'un exemple de grilles d'occupation pour une scène avec : à gauche une grille d'occupation de référence (vérité terrain), et à droite une grille d'occupation correspondant à des prédictions effectuées par un réseau de neurones,
[Fig 4], Figure 4, une représentation schématique d'un exemple d'une représentation spatiale d'une scène avec à gauche une grille d'occupation de référence (vérité terrain), et à droite une grille d'occupation correspondant à des prédictions effectuées par un réseau de neurones, et
[Fig 5], Figure 5, une représentation schématique d'un exemple d'un modèle d'incertitudes obtenu pour une scène de référence, la vérité terrain correspondante étant superposée à ce modèle.

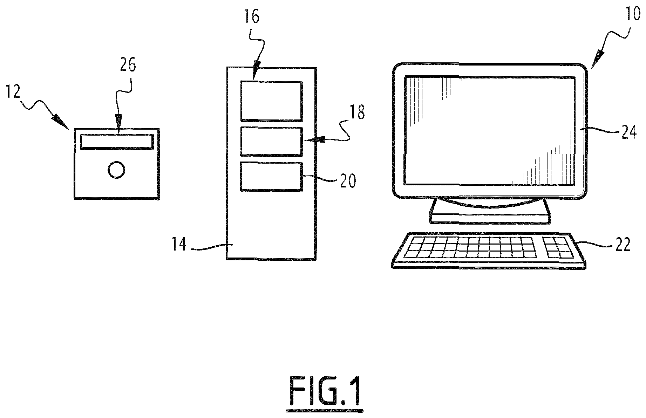

La figure 1 illustre un calculateur 10 et un produit programme d'ordinateur 12, utilisés pour la mise en oeuvre d'un procédé d'évaluation d'incertitudes de prédiction d'un réseau de neurones RN.

Le calculateur 10, est de préférence, un ordinateur.

Plus généralement, le calculateur 10 est un calculateur électronique propre à manipuler et/ou transformer des données représentées comme des quantités électroniques ou physiques dans des registres de calculateur 10 et/ou des mémoires en d'autres données similaires correspondant à des données physiques dans des mémoires, des registres ou d'autres types de dispositifs d'affichage, de transmission ou de mémorisation.

Le calculateur 10 est en interaction avec le produit programme d'ordinateur 12.

Comme illustré par la figure 1, le calculateur 10 comporte un processeur 14 comprenant une unité de traitement de données 16, des mémoires 18 et un lecteur 20 de support d'informations. Dans l'exemple illustré par la figure 1, le calculateur 10 comprend un clavier 22 et une unité d'affichage 24.

Le produit programme d'ordinateur 12 comporte un support d'informations 26.

Le support d'information 26 est un support lisible par le calculateur 10, usuellement par l'unité de traitement de données 16. Le support lisible d'informations 26 est un médium adapté à mémoriser des instructions électroniques et capable d'être couplé à un bus d'un système informatique.

A titre d'exemple, le support d'informations 26 est une disquette ou disque souple (de la dénomination anglaise « *Floppy disc »),* un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 26 est mémorisé le programme d'ordinateur 12 comprenant des instructions de programme.

Le programme d'ordinateur 12 est chargeable sur l'unité de traitement de données 16 et est adapté pour entraîner la mise en œuvre d'un procédé d'évaluation d'incertitudes de prédiction d'un réseau de neurones RN, lorsque le programme d'ordinateur 12 est mis en œuvre sur l'unité de traitement 16 du calculateur 10.

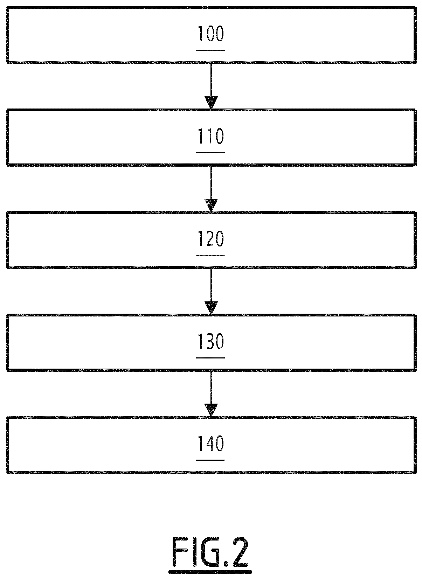

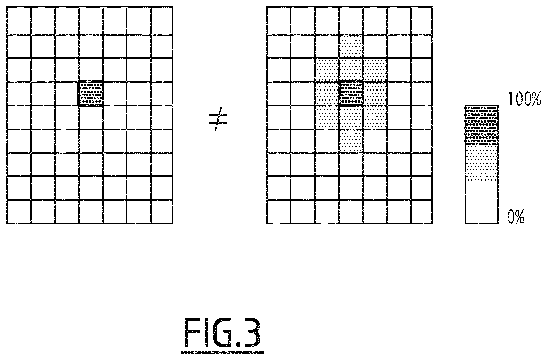

Le fonctionnement du calculateur 10 va maintenant être décrit en référence à la figure 2, qui illustre schématiquement un exemple de mise en œuvre d'un procédé d'évaluation d'incertitudes de prédiction d'un réseau de neurones RN, et aux figures 3 à 5 qui illustrent différents exemples de mise en œuvre des étapes d'un tel procédé.

Le présent procédé est typiquement mis en œuvre lors de la conception du réseau de neurones RN, avant son exploitation.

Le réseau de neurones RN à évaluer est un réseau de neurones spécifique à un capteur donné, dit capteur utile 50, c'est-à-dire que le réseau de neurones a été entraîné sur des données en provenance du seul capteur utile 50. La dénomination « capteur utile » désigne un type de capteurs (même nature de capteurs), c'est-à-dire qu'elle regroupe des capteurs présentant les mêmes caractéristiques.

Aucun autre capteur d'un type différent n'a donc été utilisé pour obtenir les données d'entrée destinées à l'entraînement du réseau de neurones RN.

Le capteur utile 50 est un capteur propre à capter une représentation d'une scène S. Une scène S est une portion de l'environnement à un instant donné. Le capteur utile 50 est propre à obtenir un ensemble de données pour chaque instant. Les données obtenues par le capteur utile 50 sont des données obtenues directement sur une scène réelle (mesures) ou des données obtenues par simulation, dites des données simulées. Les données simulées sont des données représentatives d'une scène décrite dans un simulateur dans lequel un modèle de capteur utile a été également décrit. Ce modèle de capteur comporte une ou plusieurs sources de bruit aléatoire implémentées sous la forme de modèles mathématiques stochastiques dont le but est d'émuler le bruit d'un capteur réel. Les données simulées sont donc entachées d'échantillons de bruit obtenus par échantillonnage d'une ou plusieurs distributions aléatoires. Dans la suite de la description, les données obtenues par le capteur utile 50 désignent donc aussi bien des données (mesures) obtenues directement sur une scène par un capteur physique, que des données simulées pour le capteur utile 50.

Le capteur utile 50 est de préférence un capteur propre à effectuer une mesure d'un paramètre de la scène S ou une prise d'image de la scène S. Le paramètre est, par exemple, la distance des éléments de la scène S par rapport au capteur utile 50 (position relative) et/ou la vitesse des éléments de la scène S par rapport au capteur utile 50.

Le capteur utile 50 est, par exemple, un capteur dit à entrées multiples et à sorties multiples (de l'anglais « multi-input multi-output », abrégé en MIMO). Un capteur MIMO comprend au moins un transducteur émetteur et plusieurs transducteurs récepteurs, par exemple d'ondes électromagnétiques ou acoustiques. Les radars et sonars sont des exemples de capteurs propres à être implémentés avec une configuration MIMO. En fonction des différentes configurations, les capteurs MIMO présentent l'avantage d'être de faible coût, robustes aux phénomènes d'occlusion et de perturbations optiques, et de permettre une variabilité du champ de vision.

En variante, le capteur utile 50 est un capteur différent d'un capteur MIMO, par exemple un capteur d'images, tel qu'une caméra ou un capteur LIDAR.

Optionnellement, le capteur utile 50 est associé à une chaîne de traitement des signaux analogiques comprenant au moins un convertisseur analogique-numérique.

Lorsque le capteur utile 50 comprend plusieurs transducteurs (cas des capteurs MIMO), les signaux obtenus sont optionnellement combinés et traités pour être convertis dans un format à partir duquel des informations, telles que des distances et des directions, peuvent être plus facilement extraites pour plusieurs cibles. Les traitements sont de préférence une ou plusieurs transformations linéaires (par exemple une ou plusieurs transformée(s) de Fourier rapide ou une fonction linéaire de formation de faisceaux (en anglais « beamforming »).

Par exemple, dans l'hypothèse d'une configuration de réseau de transducteurs en 2D, une carte de puissance en distance/azimut est obtenue après transformation des mesures du capteur utile 50. Une telle carte est propre à être fournie en entrée du réseau de neurones RN. En variante, d'autres représentations sont propres à être fournies en entrée du réseau de neurones RN, dont les données brutes en sortie d'un convertisseur analogique-numérique.

Dans un exemple de mise en oeuvre, le capteur utile 50 est disposé sur un véhicule, tel qu'un véhicule autonome, et la scène S correspond à l'environnement situé dans le champ de vision du capteur utile 50. Dans un autre exemple de mise en oeuvre, le capteur utile 50 est disposé dans une installation, telle qu'un équipement de bord de route, et la scène S correspond à l'environnement situé dans le champ de vision du capteur utile 50.

Le réseau de neurones RN à évaluer est un réseau de neurones entraîné pour déterminer un ensemble de données caractéristiques pour une scène S à caractériser en fonction d'un ensemble de données obtenu pour la scène S à un instant donné par le capteur utile 50. L'ensemble de données obtenues pour la scène S par le capteur utile 50 est donc l'entrées du réseau de neurones RN. L'ensemble de données caractéristiques de la scène S est la sortie du réseau de neurones RN.

Comme indiqué précédemment, les données d'entrée obtenues par le capteur utile 50 sont, par exemple, des mesures issues d'un capteur réel ou des données issues de simulations d'un modèle de capteur, mesures ou données qui correspondent à un paramètre de la scène S (distance ou vitesse des éléments de la scène S) ou une prise d'image de la scène S.

De préférence, les données présentées en entrée du réseau de neurones RN sont des données brutes obtenues en sortie du ou des convertisseurs analogiques numériques du capteur utile 50 ou des données en sortie du capteur utile 50 ayant au plus subies une ou plusieurs transformations linéaires (par exemple une ou plusieurs transformée(s) de Fourier rapide ou une fonction linéaire de formation de faisceaux).

L'ensemble de données caractéristiques (données de sortie) comprend un découpage de la scène S en zones Z avec au moins une caractéristique attribuée à chaque zone Z de la scène S à l'instant donné.

Au moins une caractéristique est, de préférence, une probabilité qu'un fait spécifique se produise sur la zone Z, ou une donnée (binaire, ternaire ou autre) relative à la survenue ou non d'un fait spécifique sur la zone Z. De préférence, au-moins une caractéristique de chaque zone Z est choisie dans le groupe constitué de : une caractéristique relative à la présence ou non d'un ou plusieurs éléments sur la zone Z (probabilité de présence ou indication de présence ou non), une caractéristique relative au déplacement d'un ou plusieurs éléments sur la zone Z, une caractéristique relative au déplacement d'un élément à une vitesse donnée sur la zone Z et une caractéristique relative à la présence ou non d'un élément spécifique sur la zone Z.

De préférence, l'ensemble de données caractéristiques se présente sous l'une des formes suivantes : une représentation spatiale de la scène S découpée en zones Z, un tableau de correspondance entre chaque zone Z de la scène S et chaque caractéristique correspondante ou une liste associant chaque zone Z de la scène S à chaque caractéristique correspondante.

Ainsi, lorsque au moins une caractéristique de chaque zone Z est une probabilité de présence ou une donnée binaire de présence sur la zone Z, il est, par exemple, obtenu une représentation spatiale de la scène S découpée en zones Z, telle qu'une grille d'occupation. Une telle grille d'occupation est, par exemple, illustrée en figure 3 à droite.

Lorsque au moins une caractéristique de chaque zone Z est une probabilité de déplacement sur la zone Z (à une vitesse quelconque) ou une donnée binaire de déplacement, il est, par exemple, obtenu une représentation spatiale de la scène S découpée en zones Z avec en superposition une information (grille de dynamicité) relative au déplacement d'un ou plusieurs éléments dans la zone Z à l'instant donné correspondant.

Lorsque au moins une caractéristique de chaque zone Z est une probabilité ou une donnée binaire de déplacement d'un élément sur la zone Z à une vitesse donnée sur la zone Z, il est, par exemple, obtenu une représentation spatiale de la zone Z tel que précédemment décrite avec en outre une indication de la vitesse de déplacement des éléments concernés.

Lorsque au moins une caractéristique de chaque zone Z est une probabilité ou une donnée binaire de présence d'un élément spécifique sur la zone Z, il est, par exemple, obtenu un tableau de correspondance entre chaque zone Z de la scène S et chaque caractéristique correspondante ou une liste associant chaque zone Z de la scène S à chaque caractéristique correspondante. L'élément spécifique est, par exemple, déterminé suite à une classification effectuée par le réseau de neurones RN parmi une liste d'éléments. Dans le cas de la conduite autonome, l'élément est, par exemple, choisi parmi un piéton, un animal, un véhicule et un deux-roues.

Typiquement, le réseau de neurones RN a été entraîné sur une base de données d'apprentissage correspondant à plusieurs scènes de référence S_{ref} différentes. Une scène diffère d'une autre scène lorsqu'au moins un élément de la scène est modifié (déplacement d'un élément par exemple). Une scène de référence S_{ref} est une scène pour laquelle il existe une vérité terrain comme cela est expliqué dans ce qui suit.

La base de données d'apprentissage associe pour chaque scène de référence S_{ref} :
- un ensemble de données de la scène de référence S_{ref} obtenues par le capteur utile 50 à un instant donné, à
- un ensemble de données caractéristiques validées de la scène de référence S_{ref}, dites données vraies D_{V} (ou vérité terrain). Chaque ensemble de données caractéristiques validées comprend donc un découpage de la scène de référence S_{ref} en zones Z avec au moins une caractéristique attribuée à chaque zone Z de la scène de référence S_{ref} à l'instant donné, et qui ont été validées (par exemple par un opérateur).

Lors de l'entraînement du réseau de neurones RN, une telle base de données d'apprentissage est typiquement divisée en trois bases de données disjointes servant respectivement à l'entraînement, à la validation et au test.

L'évaluation d'incertitudes peut démarrer une fois l'entraînement du réseau de neurones RN effectué. Les incertitudes de prédiction à évaluer sont dues à des imperfections du capteur utile 50 (incertitudes aléatoires) et à des imperfections dans l'entraînement du réseau de neurones RN (incertitudes épistémiques). Les incertitudes dues aux imperfections du capteur utile 50 résultent du fait que les données ayant servies à l'apprentissage du réseau de neurones RN ne restituent pas exactement la scène de référence S_{ref}. Les incertitudes dues à l'entraînement du réseau de neurones RN résultent du fait que la base de données d'apprentissage ne couvre pas un nombre suffisamment représentatif de scènes correspondant au cas applicatif considéré.

Le procédé d'évaluation comprend une étape 100 d'obtention d'au moins une base de données d'évaluation BD_{E}. L'étape d'obtention 100 est, par exemple, mise en oeuvre par le biais soit d'une campagne d'acquisition de données réelles avec le capteur utile 50, soit par une campagne de génération de données simulées réalisée avec le simulateur de scène et le modèle de capteur.

Le nombre de base de données d'évaluation est supérieur ou égal à un.

Chaque base de données d'évaluation BD_{E} est spécifique à une scène de référence S_{ref}. La scène de référence S_{ref} de chaque base de données d'évaluation BD_{E} est différente des scènes de référence S_{ref} de la base de données d'apprentissage.

Chaque base de données d'évaluation BD_{E} associe :
i. k ensembles de données de la scène de référence S_{ref}, dites données d'évaluation D_{EV}, obtenus par le capteur utile 50 à k différents instants d'acquisition, à
ii. un ensemble de données caractéristiques validées de la scène de référence S_{ref}, dites données vraies D_{V} (vérité terrain). Comme précédemment, l'ensemble de données caractéristiques validées comprend un découpage de la scène de référence S_{ref} en zones Z avec au moins une caractéristique attribuée à chaque zone Z de la scène de référence S_{ref} à l'instant donné, et qui ont été validées (par exemple par un opérateur).

Ainsi, pour chaque base de données d'évaluation BD_{E}, il est obtenu k ensembles de données d'évaluation D_{EV} de la scène de référence S_{ref}, k étant un nombre entier correspondant aux différentes acquisitions du capteur utile 50. Le nombre k est par exemple supérieur ou égal à 100. Ces k ensembles sont associés à un même ensemble de données caractéristiques validées (même vérité terrain).

Les k différentes acquisitions du capteur utile 50 sont chacune affectées d'un bruit aléatoire différent du aux imperfections du capteur utile 50 alors que la scène de référence S_{ref} est identique pour chacune des k acquisitions. En particulier, même dans le cas d'une scène simulée, les mesures effectuées par le capteur utile 50 diffèrent puisque le bruit du capteur est obtenu par échantillonnage à partir d'une distribution aléatoire.

Typiquement, les ensembles de données d'évaluation D_{EV} sont obtenus par le capteur utile 50 à différents instants successifs, en s'assurant que la scène de référence S_{ref} reste inchangée d'un instant à un autre. A noter que lorsque la scène de référence S_{ref} comprend des éléments dynamiques, les éléments dynamiques présentent la même position, et la même vitesse d'une acquisition à l'autre. Pour cela, les éléments dynamiques sont par exemple remis dans une même position et à une même vitesse d'une acquisition à l'autre.

Dans un exemple de mise en œuvre, les données d'évaluation D_{EV} d'au moins une base de données d'évaluation BD_{E} sont obtenues lors de l'acquisition des données de la base de données d'apprentissage. Dans cet exemple, le capteur utile 50 effectue différentes acquisitions. Les acquisitions correspondant à des scènes récurrentes sont extraites pour former les données d'évaluation D_{EV}. Une scène récurrente est une scène acquise par le capteur utile 50 pour différentes acquisitions successives. Les autres acquisitions correspondent aux données de la base de données d'apprentissage.

Par exemple, les scènes récurrentes sont identifiées lorsqu'une valeur obtenue par un capteur dépasse un seuil prédéterminé. Le capteur est, par exemple, un odomètre.

Par exemple, dans le cas d'images, une scène présente sur deux images successives est considérée récurrente lorsque la distance moyenne entre les pixels des deux images est inférieure à une distance prédéterminée. La distance moyenne est la moyenne des distances entre les paires de pixels correspondants des deux images.

Par exemple, dans le cas où le capteur utile 50 est monté sur un véhicule, les scènes récurrentes correspondent notamment aux moments où le véhicule est à l'arrêt.

L'obtention des données de la base de données d'évaluation BD_{E} à partir des scènes récurrentes obtenues lors de l'acquisition de la base de données d'apprentissage permet d'optimiser l'obtention de la base de données d'évaluation BD_{E}, en s'affranchissant d'une campagne dédiée d'acquisition de données. Il en résulte un gain de temps et une simplicité de mise en œuvre.

Le procédé d'évaluation comprend une étape 110 d'inférence du réseau de neurones RN. L'étape d'inférence 110 est mise en œuvre par le calculateur 10 en interaction avec le produit programme d'ordinateur 12, c'est-à-dire est mise en œuvre par ordinateur.

L'inférence d'un réseau de neurones RN désigne la réalisation par le réseau de neurones RN d'une tâche pour laquelle le réseau de neurones RN a été entraîné.

L'étape d'inférence 110 est mise en œuvre pour chacun des k ensembles de données d'évaluation D_{EV} de chaque base de données d'évaluation BD_{E}. Ainsi, lors de l'étape d'inférence 110, le réseau de neurones RN prend successivement en entrée chacun des k ensembles de données d'évaluation D_{EV} de chaque base de données d'évaluation BD_{E} et retourne successivement en sortie k ensembles de données caractéristiques, appelées données caractéristiques prédites D_{P}, pour chaque base de données d'évaluation BD_{E}. A l'issue de l'étape d'inférence 110, il est donc obtenu k ensembles de données caractéristiques prédites D_{P} pour chaque base de données d'évaluation BD_{E}. En d'autres termes, pour chaque scène de référence S_{ref}, il est obtenu k ensembles de données caractéristiques prédites D_{P} correspondant aux k différents instants d'acquisition. Le procédé d'évaluation comprend une étape 120 de détermination de la fréquence d'occurrence de chaque caractéristique associée à chaque zone Z de chaque scène de référence S_{ref}. L'étape d'inférence 110 est mise en œuvre par le calculateur 10 en interaction avec le produit programme d'ordinateur 12, c'est-à-dire est mise en œuvre par ordinateur.

La détermination est effectuée, pour chaque scène de référence S_{ref}, sur la base des k ensembles de données caractéristiques prédites D_{P} correspondant aux k différents instants d'acquisition.

Dans un exemple de mise en œuvre, l'étape de détermination de la fréquence d'occurrence comprend, pour chaque zone Z de la scène de référence S_{ref} considérée :
b. la détermination d'un histogramme des caractéristiques obtenues pour la zone Z pour les différents instants d'acquisition correspondants, et
c. la division des valeurs de l'histogramme par le nombre d'instants d'acquisition k différents pour obtenir la fréquence d'occurrence de chaque caractéristique pour la zone Z considérée.

Dans un exemple de mise en œuvre, les caractéristiques sont des données binaires relatives à la présence d'un ou plusieurs éléments sur la zone Z considérée. Dans cet exemple, il est considéré une base de données d'évaluation BD_{E} comprenant 5 ensembles de données d'évaluation D_{EV} correspondant à 5 instants d'acquisition distincts. A l'issue de l'étape d'inférence 110, il est donc obtenu 5 ensembles de données caractéristiques prédites D_{P}. Par exemple, pour une zone Z1 considérée, les caractéristiques prédites sont la présence d'un élément sur la zone Z1 pour 4 ensembles de données caractéristiques prédites D_{P}, et l'absence d'un élément sur la zone Z1 pour le dernier ensemble de données caractéristiques prédites D_{P}. Ainsi, pour la zone Z1 considérée, la valeur de l'histogramme obtenue pour la caractéristique « présence d'un élément sur la zone » est de 4, et celle obtenue pour la caractéristique « absence d'un élément sur la zone » est de un. Ainsi, pour la zone Z1, la fréquence d'occurrence (après division par 5) de la caractéristique « présence d'un élément sur la zone » est de 0,8 (80%), et est de 0,2 (20%) pour la caractéristique « absence d'un élément sur la zone ».

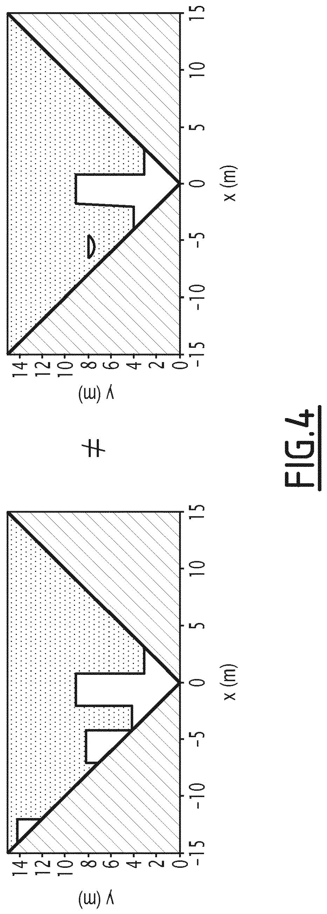

La figure 4 est un exemple d'un résultat d'inférence pour un ensemble de données obtenues pour une scène S à un instant donné par le capteur utile 50. La figure de gauche est la vérité terrain et celle de droite est la prédiction (résultat d'inférence). En particulier, sur la figure 4, les zones en pointillés correspondent à un état occupé, les zones en blanc à un état inoccupé, et les zones en hachurés à un état inconnu. Le capteur utile 50 correspondant à la figure 4 est typiquement un radar MIMO.

Le procédé d'évaluation comprend une étape 130 d'évaluation d'incertitudes de prédiction du réseau de neurones RN. L'étape d'évaluation 130 est mise en oeuvre par le calculateur 10 en interaction avec le produit programme d'ordinateur 12, c'est-à-dire est mise en oeuvre par ordinateur.

L'étape d'évaluation 130 est réalisée par comparaison, pour chaque scène de référence S_{ref}, des ensembles de données caractéristiques prédites D_{P} à l'ensemble de données vraies D_{V} correspondant en fonction des fréquences d'occurrence correspondantes déterminées.

Dans un exemple de mise en oeuvre, l'étape d'évaluation 130 comprend la détermination, pour chaque scène de référence S_{ref} (et donc chaque base de données d'évaluation D_{EV}), d'un modèle d'incertitudes pour le réseau de neurones RN en fonction des fréquences d'occurrence déterminées à l'étape 120 pour les k ensembles de données caractéristiques prédites D_{P} de la scène de référence S_{ref} considérée. Le modèle d'incertitudes quantifie donc les écarts (par exemple écarts relatifs) entre les prédictions et les vérités terrain, cet écart correspondant aux incertitudes dans les prédictions du réseau de neurones.

Chaque modèle d'incertitudes est ainsi spécifique à une scène de référence S_{ref} donnée. Chaque modèle d'incertitudes permet de compenser ultérieurement les incertitudes dans les prédictions effectuées par le réseau de neurones RN.

Par exemple, chaque modèle d'incertitudes définit des règles concernant le comportement des incertitudes en fonction de paramètres de la scène tels que la taille des objets ou la position des objets prédits dans la grille d'occupation (distance des objets par rapport au capteur, position azimutale des objets par rapport au capteur).

La figure 3 illustre un exemple de modèle d'incertitudes pour une scène de référence S_{ref}. La grille d'occupation prédite par le réseau de neurones RN est illustrée à droite sur cette figure. La vérité terrain est illustrée à gauche sur cette figure.

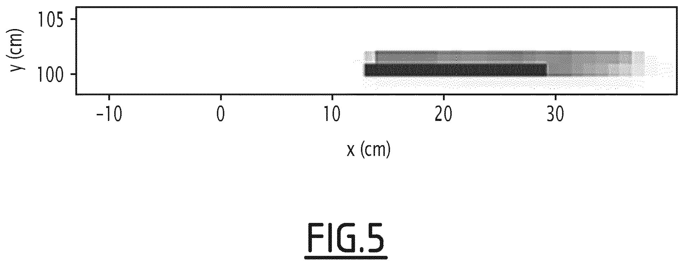

La figure 5 illustre un exemple d'une portion d'un modèle d'incertitudes pour une scène de référence S_{ref}. Un tel modèle d'incertitudes est représenté sur une échelle de gris, les nuances de gris les plus sombres indiquant une probabilité d'occupation plus élevée. La vérité terrain correspondant à cette scène de référence S_{ref} est superposée en noir pour référence. Dans cet exemple, un zoom a été effectué sur le modèle d'incertitudes car la scène ne comportait qu'un seul obstacle situé à 1 mètre et à une vingtaine de centimètres à droite du capteur, celui-ci étant placé au repère (x,y) = (0,0) sur cette figure. Dans cet exemple, il apparaît que le réseau de neurones RN a tendance à prédire des cellules occupées légèrement à droite de la vérité terrain.

Optionnellement, l'étape d'évaluation 130 comprend l'affichage sur un afficheur d'une représentation graphique du modèle d'incertitudes spécifique à une scène de référence S_{ref} donnée. La représentation graphique est, par exemple, une représentation d'un espace correspondant à la scène avec l'association d'une couleur (niveau de gris) à chaque zone Z de la scène en fonction de la caractéristique finale (blanc pour une probabilité nulle, noire pour une probabilité égale à 100%). De préférence, les caractéristiques validées (données vraies) sont superposées à la représentation graphique. Cela permet à un opérateur d'avoir une représentation visuelle des incertitudes de prédiction.

Optionnellement, l'étape d'évaluation 130 comprend la validation ou l'invalidation du réseau de neurones **RN** en fonction des modèles d'incertitudes déterminés. Par exemple, lorsque l'étalement des incertitudes est trop important, par exemple s'étale sur plus de 10 zones au-delà de la vérité terrain correspondante, alors le réseau de neurones RN est invalidé. Sinon le réseau de neurones est validé.

Optionnellement, un modèle d'incertitudes final est obtenu pour le réseau de neurones **RN** par agrégation des modèles d'incertitudes obtenus pour les différentes scènes de référence S_{ref} des bases des données d'évaluation D_{EV}. Cette agrégation comprend par exemple l'extraction de règles concernant le comportement des incertitudes en fonction des paramètres de la scène (par exemple taille et position de l'objet) pour chaque modèle d'incertitudes, et la combinaison ou l'association de ces règles.

Optionnellement, le procédé d'évaluation comprend une étape 140 d'exploitation du réseau de neurones RN. L'étape d'exploitation 140 est mise en œuvre par le calculateur 10 en interaction avec le produit programme d'ordinateur 12, c'est-à-dire est mise en œuvre par ordinateur.

L'étape d'exploitation 140 comprend l'inférence du réseau de neurones RN en prenant en entrée un ensemble de données d'une scène S à caractériser obtenues par un capteur utile 50, de sorte à obtenir en sortie un ensemble de données caractéristiques prédites D_{P} pour la scène S à caractériser.

L'étape d'exploitation 140 comprend également le traitement de l'ensemble de données caractéristiques prédites D_{P} par application du modèle d'incertitudes à l'ensemble de données caractéristiques prédites D_{P}, de sorte à obtenir un ensemble de données caractéristiques prédites améliorées D_{PA}.

Optionnellement, l'étape d'exploitation 140 comprend la fusion de l'ensemble des données caractéristiques prédites améliorées D_{PA} avec des données complémentaires. Pour cela, il est par exemple utilisé un algorithme de fusion bayésien. Les données complémentaires sont des données caractéristiques de la même scène S à caractériser obtenues par un capteur différent du capteur utile 50. Cela permet de consolider ou d'enrichir les informations obtenues pour la scène considérée.

Ainsi, le présent procédé permet d'estimer des incertitudes de prédiction d'un réseau de neurones RN sans utiliser de réseaux de neurones bayésiens ou d'autres approches complexes de modélisation mathématique. Un tel procédé est donc plus simple à mettre en oeuvre que les approches mathématiques complexes de l'état de la technique basées sur de tels réseaux.

Un tel procédé est typiquement mis en oeuvre lors de la conception du réseau de neurones RN de sorte à évaluer les incertitudes aléatoires contenues dans les ensembles de données obtenues par le capteur utile 50, ainsi que potentiellement l'incertitude épistémique due à l'apprentissage du réseau de neurones RN.

Les données obtenues à l'issue de ce procédé sont facilement interprétables par un concepteur d'algorithmes. En particulier, les résultats obtenus à l'issue du procédé peuvent être utiles pour détecter des biais potentiels dans les données d'entraînement, des biais dus à l'architecture du réseau de neurones RN, ou des biais dans les règles d'apprentissage utilisées pour entraîner le réseau de neurones RN.

Le modèle d'incertitudes obtenu pour une scène de référence donnée est également propre à être affiché sous forme graphique. Les biais du réseau de neurones sont, ainsi, affichés d'une manière géométrique ce qui facilite la visualisation du type d'erreurs qu'il peut commettre dans une application réelle de perception.

En plus de faciliter la validation de la conception du modèle, le procédé est utilisable pour vérifier l'exactitude de l'incertitude aléatoire estimée à l'aide des méthodes complexes de l'état de la technique.

Un tel procédé présente aussi l'avantage d'être réalisable à faible coût. En effet, chaque base de données d'évaluation BD_{E} est obtenue par plusieurs acquisitions d'une même scène de référence S_{ref}, ce qui est réalisable au cours d'une même salve d'acquisitions, ou est obtenue par simulation en appliquant un bruit représentatif du capteur pris dans une distribution aléatoire.

Un tel procédé est en outre applicable à l'évaluation des incertitudes de tous réseaux de neurones ayant appris sur des données obtenues par un capteur.

L'homme du métier comprendra que les modes de réalisation et variantes précédemment décrits peuvent être combinés pour former de nouveaux modes de réalisation pourvu qu'ils soient compatibles techniquement.

## Revendications

1. Procédé d'évaluation d'incertitudes de prédiction d'un réseau de neurones (RN), le réseau de neurones (RN) à évaluer ayant été entraîné sur des données en provenance d'un capteur, dit capteur utile (50), les incertitudes étant dues à des imperfections du capteur utile (50) et à des imperfections dans l'entraînement du réseau de neurones (RN), le réseau de neurones (RN) étant propre à déterminer un ensemble de données caractéristiques pour une scène (S) à caractériser en fonction d'un ensemble de données obtenu pour la scène (S) à un instant donné par le capteur utile (50), chaque ensemble de données caractéristiques comprenant un découpage de la scène (S) en zones (Z) avec au moins une caractéristique attribuée à chaque zone (Z) de la scène (S) à l'instant donné, le procédé étant mis en oeuvre par ordinateur et comprenant les étapes suivantes :
a. l'obtention d'au moins une base de données d'évaluation (BD_{E}), chaque base de données d'évaluation (BD_{E}) étant spécifique à une scène de référence (S_{ref}) et associant :
i. k ensembles de données de la scène de référence (S_{ref}), dites données d'évaluation (D_{EV}), obtenus par le capteur utile (50) à k différents instants d'acquisition, à
ii. un ensemble de données caractéristiques validées de la scène de référence (S_{ref}), dites données vraies (D_{V}),
b. l'inférence du réseau de neurones (RN) en prenant successivement en entrée les k ensembles de données d'évaluation (D_{EV}) de chaque base de données d'évaluation (BD_{E}), de sorte à obtenir, pour chaque scène de référence (S_{ref}), k ensembles de données caractéristiques prédites (D_{P}),
c. pour chaque zone (Z) de chaque scène de référence (S_{ref}), la détermination de la fréquence d'occurrence de chaque caractéristique associée à la zone (Z), la détermination étant effectuée sur la base des k ensembles de données caractéristiques prédites (D_{P}) obtenus pour la scène de référence (S_{ref}) considérée, et
d. l'évaluation d'incertitudes de prédiction du réseau de neurones (RN) par comparaison des ensembles de données caractéristiques prédites (D_{P}) à l'ensemble de données vraies (D_{V}) correspondant en fonction des fréquences d'occurrence déterminées.

2. Procédé selon la revendication 1, dans lequel l'étape de détermination de la fréquence d'occurrence comprend, pour chaque zone (Z) de la scène de référence (S_{ref}) considérée :
a. la détermination d'un histogramme des caractéristiques obtenues pour la zone (Z) pour les k différents instants d'acquisition correspondants, et
b. la division des valeurs de l'histogramme par le nombre d'instants d'acquisition différents pour obtenir la fréquence d'occurrence de chaque caractéristique pour la zone (Z) considérée.

3. Procédé selon la revendication 1 ou 2, dans lequel l'étape d'évaluation comprend la détermination, pour chaque scène de référence (S_{ref}), d'un modèle d'incertitudes pour le réseau de neurones (RN) en fonction des fréquences d'occurrence déterminées pour les ensembles de données caractéristiques prédites (D_{P}) de la scène de référence (S_{ref}) considérée, chaque modèle d'incertitudes est propre à être utilisé ultérieurement pour compenser des incertitudes dans les prédictions effectuées par le réseau de neurones (RN).

4. Procédé selon la revendication 3, dans lequel l'étape d'évaluation comprend l'affichage d'une représentation graphique du ou d'au moins un modèle d'incertitudes sur un afficheur.

5. Procédé selon la revendication 3 ou 4, dans lequel l'étape d'évaluation comprend l'agrégation des modèles d'incertitudes obtenus pour les différentes scènes de référence (S_{ref}) des bases de données d'évaluation (D_{EV}) pour obtenir un modèle d'incertitudes final.

6. Procédé selon l'une quelconque des revendications 3 à 5, dans lequel le procédé comprend, après l'étape d'évaluation, une étape d'exploitation du réseau de neurones (RN), l'étape d'exploitation comprenant :
a. l'inférence du réseau de neurones (RN) en prenant en entrée un ensemble de données d'une scène (S) à caractériser obtenu par le capteur utile (50), de sorte à obtenir en sortie un ensemble de données caractéristiques prédites (D_{P}) pour la scène (S) à caractériser, et
b. le traitement de l'ensemble de données caractéristiques prédites (D_{P}) par application du modèle d'incertitudes à l'ensemble de données caractéristiques prédites (D_{P}), de sorte à obtenir un ensemble de données caractéristiques prédites améliorées (D_{PA}).

7. Procédé selon la revendication 6, dans lequel l'étape d'exploitation comprend la fusion de l'ensemble de données caractéristiques prédites améliorées (D_{PA}) avec des données complémentaires, les données complémentaires étant des données caractéristiques de la même scène (S) à caractériser obtenues par un capteur différent du capteur utile (50).

8. Procédé selon l'une quelconque des revendications 1 à 7, dans lequel les caractéristiques de chaque zone (Z) sont choisies dans le groupe constitué de : une caractéristique relative à la présence ou non d'un ou plusieurs éléments sur la zone (Z), une caractéristique relative au déplacement d'un ou plusieurs éléments sur la zone (Z), une caractéristique relative au déplacement d'un élément à une vitesse donnée sur la zone (Z) et une caractéristique relative à la présence ou non d'un élément spécifique sur la zone (Z).

9. Procédé selon l'une quelconque des revendications 1 à 8, dans lequel le capteur utile (50) est un capteur à entrées multiples et à sorties multiples, tel qu'un radar ou un sonar.

10. Procédé selon l'une quelconque des revendications 1 à 9, dans lequel lors de l'obtention d'un ensemble de données pour la scène (S) à un instant donné par le capteur utile (50) :
a. le capteur utile (50) est disposé sur un véhicule, et la scène (S) correspond à l'environnement situé dans le champ de vision du capteur utile (50), ou
b. le capteur utile (50) est disposé dans une installation, et la scène (S) correspond à l'environnement situé dans le champ de vision du capteur utile (50).

11. Procédé selon l'une quelconque des revendications 1 à 10, dans lequel le réseau de neurones (RN) a été entraîné sur une base de données d'apprentissage correspondant à plusieurs scènes de référence (S_{ref}) différentes, les données d'apprentissage ayant été acquises par le capteur utile (50) au cours de différentes acquisitions, les données d'évaluation (D_{EV}) d'au moins une base de données d'évaluation (BD_{EV}) étant les acquisitions du capteur utile (50) correspondant à des scènes récurrentes, les autres acquisitions formant les données de la base de données d'apprentissage.

12. Procédé selon la revendication 12, dans lequel les scènes récurrentes sont identifiées lorsqu'une valeur d'un capteur dépasse un seuil prédéterminé.

13. Procédé selon la revendication 12 ou 13, dans lequel lors de l'obtention de la base de données d'apprentissage, le capteur utile (50) est monté sur un véhicule, les scènes récurrentes correspondant aux moments où le véhicule est à l'arrêt.

14. Produit programme d'ordinateur sur lequel est mémorisé un programme d'ordinateur comprenant des instructions de programme, le programme d'ordinateur étant chargé sur une unité de traitement de données et entraînant la mise en œuvre d'un procédé selon l'une quelconque des revendications 1 à 13 lorsque le programme d'ordinateur est mis en œuvre sur l'unité de traitement des données.

15. Support lisible d'informations sur lequel est mémorisé un produit programme d'ordinateur comprenant des instructions de programme, le programme d'ordinateur étant chargé sur une unité de traitement de données et entraînant la mise en œuvre d'un procédé selon l'une quelconque des revendications 1 à 13 lorsque le programme d'ordinateur est mis en œuvre sur l'unité de traitement des données.

## Patentansprüche

1. Verfahren zum Bewerten von Unsicherheiten bei der Vorhersage eines neuronalen Netzes (RN), wobei das zu bewertende neuronale Netz (RN) mit Daten von einem Sensor, dem sogenannten Nutzsensor (50), trainiert worden ist, wobei die Unsicherheiten auf Unvollkommenheiten des Nutzsensors (50) und auf Unvollkommenheiten beim Trainieren des neuronalen Netzes (RN) zurückzuführen sind, wobei das neuronale Netz (RN) geeignet ist, um einen Satz von charakteristischen Daten für eine zu charakterisierende Szene (S) abhängig von einem Satz von Daten zu bestimmen, der für die Szene (S) zu einem gegebenen Zeitpunkt durch den Nutzsensor (50) erlangt wird, wobei jeder Satz von charakteristischen Daten eine Unterteilung der Szene (S) in Bereiche (Z) mit mindestens einer Charakteristik umfasst, das jedem Bereich (Z) der Szene (S) zu dem gegebenen Zeitpunkt zugeordnet ist, wobei das Verfahren von einem Rechner implementiert wird und umfassend die folgenden Schritte:
a. Erlangen von mindestens einer Bewertungsdatenbank (BD_{E}), wobei jede Bewertungsdatenbank (BD_{E}) spezifisch für eine Referenzszene (S_{ref}) ist und Folgendes assoziiert:
i. k Datensätze der Referenzszene (S_{ref}), die sogenannten Bewertungsdaten (_{DEV}), die von dem Nutzsensor (50) zu k verschiedenen Erfassungszeitpunkten erlangt werden, mit
ii. einem Satz validierter charakteristischer Daten der Referenzszene (S_{ref}), die als wahre Daten (D_{V}) bezeichnet werden,
b. die Inferenz des neuronalen Netzes (RN), indem nacheinander die k Bewertungsdatensätze (D_{EV}) jeder Bewertungsdatenbank (BD_{E}) ALS EINGABE GENOMMEN WERDEN, so dass für jede Referenzszene (S_{ref}) k Sätze von vorhergesagten charakteristischen Daten (D_{P}) erlangt werden,
c. für jeden Bereich (Z) jeder Referenzszene (S_{ref}) die Bestimmung der Häufigkeit des Auftretens jeder Charakteristik, die mit dem Bereich (Z) assoziiert ist, wobei die Bestimmung basierend auf den k vorhergesagten charakteristischen Datensätzen (D_{P}) durchgeführt wird, die für die betrachtete Referenzszene (S_{ref}) erlangt werden, und
d. die Bewertung von Unsicherheiten bei der Vorhersage eines neuronalen Netzes (RN) durch Vergleichen der vorhergesagten charakteristischen Datensätze (D_{P}) mit dem entsprechenden wahren Datensatz (D_{V}) abhängig von den ermittelten Häufigkeiten des Auftretens.

2. Verfahren nach Anspruch 1, wobei der Schritt eines Bestimmens der Häufigkeit des Auftretens für jeden Bereich (Z) der betrachteten Referenzszene (S_{ref}) Folgendes umfasst:
a. Bestimmen eines Histogramms der für den Bereich (Z) erlangten Charakteristiken für die entsprechenden k verschiedenen Erfassungszeitpunkte, und
b. Teilen der Werte des Histogramms durch die Anzahl der verschiedenen Erfassungszeitpunkte, um die Häufigkeit des Auftretens jeder Charakteristik für das betrachtete Gebiet (Z) zu erlangen.

3. Verfahren nach Anspruch 1 oder 2, wobei der Bewertungsschritt für jede Referenzszene (S_{ref}) das Bestimmen eines Unsicherheitsmodells für das neuronale Netz (RN) abhängig von der für die vorhergesagten charakteristischen Datensätze (D_{P}) der betrachteten Referenzszene (S_{ref}) bestimmten Auftretenshäufigkeiten umfasst, jedes Unsicherheitsmodell geeignet ist, um später verwendet zu werden, um Unsicherheiten in den vom neuronalen Netz (RN) gemachten Vorhersagen auszugleichen.

4. Verfahren nach Anspruch 3, wobei der Bewertungsschritt ein Anzeigen einer grafischen Darstellung des oder mindestens eines Unsicherheitsmodells auf einer Anzeige umfasst.

5. Verfahren nach Anspruch 3 oder 4, wobei der Bewertungsschritt ein Aggregieren der Unsicherheitsmodelle umfasst, die für die verschiedenen Referenzszenen (S_{ref}) der Bewertungsdatenbanken (D_{EV}) erlangt werden, um ein endgültiges Unsicherheitsmodell zu erlangen.

6. Verfahren nach einem der Ansprüche 3 bis 5, wobei das Verfahren nach dem Bewertungsschritt einen Schritt eines Auswertens des neuronalen Netzes (RN) umfasst, wobei der Auswertungsschritt Folgendes umfasst:
a. die Inferenz des neuronalen Netzes (RN), indem als Eingabe ein Datensatz einer zu charakterisierenden Szene (S) genommen wird, der von dem Nutzsensor (50) erlangt wird, um als Ausgabe einen Satz vorhergesagter charakteristischer Daten (D_{P}) für die zu charakterisierende Szene (S) zu erlangen, und
b. die Verarbeitung des vorhergesagten charakteristischen Datensatzes (D_{P}) durch Anwendung des Unsicherheitsmodells auf den vorhergesagten charakteristischen Datensatz (D_{P}), um einen Satz verbesserter vorhergesagter charakteristischer Daten (D_{PA}) zu erlangen.

7. Verfahren nach Anspruch 6, wobei der Auswertungsschritt das Zusammenführen des Datensatzes der verbesserten vorhergesagten charakteristischen Daten (D_{PA}) mit komplementären Daten umfasst, wobei die komplementären Daten charakteristische Daten der gleichen zu charakterisierenden Szene (S) sind, die von einem anderen Sensor als dem Nutzsensor (50) erlangt werden.

8. Verfahren nach einem der Ansprüche 1 bis 7, wobei die Charakteristik von jedem Bereich (Z) ausgewählt sind aus der Gruppe, bestehend aus: einer Charakteristik in Bezug auf das Vorhandensein oder Nichtvorhandensein eines oder mehrerer Elemente in dem Bereich (Z), einer Charakteristik in Bezug auf die Bewegung eines oder mehrerer Elemente in dem Bereich (Z), einer Charakteristik in Bezug auf die Bewegung eines Elements mit einer bestimmten Geschwindigkeit in dem Bereich (Z), und einer Charakteristik in Bezug auf das Vorhandensein eines spezifischen Elements in dem Bereich (Z).

9. Verfahren nach einem der Ansprüche 1 bis 8, wobei der Nutzsensor (50) ein Sensor mit mehreren Eingängen und mehreren Ausgängen ist, wie beispielsweise ein Radar oder ein Sonar.

10. Verfahren nach einem der Ansprüche 1 bis 9, wobei beim Erlangen eines Datensatzes für die Szene (S) zu einem gegebenen Zeitpunkt durch den Nutzsensor (50):
a. der Nutzsensor (50) an einem Fahrzeug angeordnet ist und die Szene (S) der Umgebung innerhalb des Sichtfelds des Nutzsensors (50) entspricht, oder
b. der Nutzsensor (50) in einer Anlage angeordnet ist, und die Szene (S) der Umgebung innerhalb des Sichtfelds des Nutzsensors (50) entspricht.

11. Verfahren nach einem der Ansprüche 1 bis 10, wobei das neuronale Netz (RN) auf einer Basis von Trainingsdaten trainiert wurde, die mehreren verschiedenen Referenzszenen (S_{ref}) entsprechen, wobei die Trainingsdaten von dem Nutzsensor (50) während verschiedener Erfassungen erfasst worden sind, wobei die Bewertungsdaten (D_{EV}) von mindestens einer Bewertungsdatenbank (BD_{EV}) die Erfassungen des Nutzsensors (50) sind, die wiederkehrenden Szenen entsprechen, wobei die anderen Erfassungen die Daten in der Trainingsdatenbank bilden.

12. Verfahren nach Anspruch 12, wobei die wiederkehrenden Szenen identifiziert werden, wenn ein Wert eines Sensors einen vorbestimmten Schwellenwert überschreitet.

13. Verfahren nach Anspruch 12 oder 13, wobei beim Erlangen der Trainingsdatenbank der Nutzsensor (50) an einem Fahrzeug angebracht ist, wobei die wiederkehrenden Szenen den Zeiten entsprechen, in denen das Fahrzeug in Stillstand ist.

14. Computerprogrammprodukt, auf dem ein Computerprogramm, umfassend Programmanweisungen, gespeichert ist, wobei das Computerprogramm auf eine Datenverarbeitungseinheit geladen wird und die Durchführung eines Verfahrens nach einem der Ansprüche 1 bis 13 bewirkt, wenn das Computerprogramm auf der Datenverarbeitungseinheit implementiert ist.

15. Lesbarer Informationsträger, auf dem ein Computerprogrammprodukt gespeichert ist, das Programmanweisungen umfasst, wobei das Computerprogramm auf eine Datenverarbeitungseinheit geladen wird und die Durchführung eines Verfahrens nach einem der Ansprüche 1 bis 13 bewirkt, wenn das Computerprogramm auf der Datenverarbeitungseinheit implementiert ist.

## Claims

1. A method for evaluating prediction uncertainties of a neural network (RN), the neural network (RN) to be evaluated having been trained on data coming from a sensor, referred to as the useful sensor (50), the uncertainties being due to imperfections of the useful sensor (50) and to imperfections in the training of the neural network (RN), the neural network (RN) being suitable for determining a set of characteristic data for a scene (S) to be characterised as a function of a data set obtained for the scene (S) at a given instant by the useful sensor (50), each set of characteristic data comprising a division of the scene (S) into zones (Z) with at least one characteristic attributed to each zone (Z) of the scene (S) at the given instant, the method being implemented by computer and comprising the following steps:
a. obtaining at least one evaluation database (BD_{E}), each evaluation database (BD_{E}) being specific to a reference scene (S_{ref}) and associating:
i. k sets of data from the reference scene (S_{ref}), known as evaluation data (D_{EV}), obtained by the useful sensor (50) at k different acquisition times, with
ii. a set of validated characteristic data for the reference scene (S_{ref}), known as true data (D_{V}),
b. performing inference with the neural network (RN) by successively taking as input the k sets of evaluation data (D_{EV}) from each evaluation database (BD_{E}), so as to obtain, for each reference scene (S_{ref}), k sets of predicted characteristic data (D_{P}),
c. for each zone (Z) of each reference scene (S_{ref}), determining the frequency of occurrence of each characteristic associated with the zone (Z), the determination being made on the basis of the k sets of predicted characteristic data (D_{P}) obtained for the reference scene (S_{ref}) in question, and
d. evaluating the prediction uncertainties of the neural network (RN) by comparing the sets of predicted characteristic data (D_{P}) with the corresponding set of true data (D_{V}) as a function of the determined frequencies of occurrence.

2. The method according to claim 1, wherein the step of determining the frequency of occurrence comprises, for each zone (Z) of the reference scene (S_{ref}) under consideration:
a. determination of a histogram of the characteristics obtained for the zone (Z) for the k different corresponding acquisition times, and
b. dividing the histogram values by the number of different acquisition times to obtain the frequency of occurrence of each characteristic for the zone (Z) under consideration.

3. The method according to claim 1 or 2, wherein the evaluation step comprises determining, for each reference scene (S_{ref}), an uncertainty model for the neural network (RN) as a function of the frequencies of occurrence determined for the sets of predicted characteristic data (D_{P}) of the reference scene (S_{ref}) under consideration, each uncertainty model being suitable for subsequent use to compensate for uncertainties in the predictions made by the neural network (RN).

4. The method according to claim 3, wherein the evaluation step comprises displaying a graphical representation of the or at least one uncertainty model on a display.

5. The method according to claim 3 or 4, wherein the evaluation step comprises aggregating the uncertainty models obtained for the different reference scenes (S_{ref}) of the evaluation databases (D_{EV}) to obtain a final uncertainty model.

6. The method according to any one of claims 3 to 5, wherein the method comprises, after the evaluation step, a step of operating the neural network (RN), the operating step comprising:
a. performing inference with the neural network (RN) by taking as input a data set of a scene (S) to be characterised obtained by the useful sensor (50), so as to obtain as output a set of predicted characteristic data (D_{P}) for the scene (S) to be characterised, and
b. processing the set of predicted characteristic data (D_{P}) by applying the uncertainty model to the set of predicted characteristic data (D_{P}), so as to obtain a set of improved predicted characteristic data (D_{PA}).

7. The method according to claim 6, wherein the operating step comprises merging the set of improved predicted characteristic data (D_{PA}) with complementary data, the complementary data being characteristic data of the same scene (S) to be characterised obtained by a sensor different from the useful sensor (50).

8. The method according to any one of claims 1 to 7, wherein the characteristics of each zone (Z) are chosen from the group consisting of: a characteristic relating to the presence or absence of one or more elements on the zone (Z), a characteristic relating to the movement of one or more elements on the zone (Z), a characteristic relating to the movement of an element at a given speed on the zone (Z) and a characteristic relating to the presence or absence of a specific element on the zone (Z).

9. The method according to any one of claims 1 to 8, wherein the useful sensor (50) is a sensor with multiple inputs and multiple outputs, such as a radar or sonar.

10. The method according to any one of claims 1 to 9, wherein when obtaining a data set for the scene (S) at a given instant by the useful sensor (50):
a. the useful sensor (50) is arranged on a vehicle, and the scene (S) corresponds to the environment located in the field of view of the useful sensor (50), or
b. the useful sensor (50) is arranged in an installation, and the scene (S) corresponds to the environment located in the field of view of the useful sensor (50).

11. The method according to any one of claims 1 to 10, wherein the neural network (RN) has been trained on a training database corresponding to a plurality of different reference scenes (S_{ref}), the training data having been acquired by the useful sensor (50) during different acquisitions, the evaluation data (DEV) of at least one evaluation database (BD_{EV}) being the acquisitions of the useful sensor (50) corresponding to recurring scenes, the other acquisitions forming the data of the training database.

12. The method according to claim 12, wherein recurring scenes are identified when a sensor value exceeds a predetermined threshold.

13. The method according to claim 12 or 13, wherein when the training database is obtained, the useful sensor (50) is mounted on a vehicle, the recurring scenes corresponding to times when the vehicle is stationary.

14. A computer program on which is saved a computer program comprising program instructions, the computer program being loaded onto a data processing unit and causing a method according to any of claims 1 to 13 to be implemented when the computer program is implemented on the data processing unit.

15. A readable information medium having stored thereon a computer program comprising program instructions, the computer program being loaded onto a data processing unit and causing a method according to any of claims 1 to 13 to be implemented when the computer program is implemented on the data processing unit.
